# FASCICULE DE BREVET EUROPEEN

(11) **EP 1 808 593 B1**
(45) Date de publication et mention de la délivrance du brevet: **10.06.2015**
(21) Numéro de dépôt: 07100218.2
(22) Date de dépôt: 08.01.2007
(51) Int. Cl.: F02K 1/38, F02K 1/36

(54) **Mélangeur de flux à section variable pour turboréacteur double flux d'avion supersonique**
Strömungsmischer mit veränderlichem Querschnitt für Zweistrom-Turbinentriebwerke von Überschallflugzeugen
Variable-section flow mixer for a double-flow jet engine of a supersonic airplane

(30) Priorité: 13.01.2006 FR 0650127
(43) Date de publication de la demande: 18.07.2007
(73) Titulaire: SNECMA, 75015 Paris (FR)
(72) Inventeur: Dussillols, Laurent, 77000, Melun (FR); Vuillemin, Alexandre, 75011, Paris (FR)
(74) Mandataire: Boura, Olivier

(56) Documents cités:
- EP-A2- 0 913 568
- US-A- 3 174 282
- US-A- 5 269 139
- US-A- 5 884 843

## Description

### Arrière-plan de l'invention

La présente invention se rapporte au domaine général des mélangeurs de flux à section variable pour turboréacteur double flux à faible taux de dilution d'avion supersonique.

Un turboréacteur double flux à faible taux de dilution pour avion supersonique se compose essentiellement d'un générateur de gaz à double flux (flux froid et flux chaud) se prolongeant par une tuyère qui définit un canal d'éjection des gaz.

Les turboréacteurs double flux à faible taux de dilution équipant les avions supersoniques qui sont destinés au transport civil doivent respecter deux exigences: d'une part, ils doivent posséder la traînée la plus faible possible lors des phases de vol en croisières transsonique et supersonique, et d'autre part, ils doivent présenter un niveau de bruit acceptable au décollage de l'avion, les autorités de certification étant de plus en plus exigeantes face aux émissions acoustiques des turboréacteurs d'avions civils.

Or, ces deux exigences sont contradictoires. En effet, la première exigence conduit à des architectures de turboréacteur à faible diamètre, tandis que la seconde exigence nécessite d'élever la poussée par augmentation du débit de gaz, ce qui amène à de grands diamètres de soufflante (et donc de turboréacteur).

Une solution connue pour respecter ces exigences est l'utilisation d'un mélangeur de flux à section variable. Un tel mélangeur permet d'introduire dans le turboréacteur, lors des phases de décollage de l'avion, un flux d'air externe au turboréacteur pour le mélanger au flux gazeux issu du générateur de gaz. En effet, mélanger de l'air externe au flux gazeux issu du générateur de gaz permet d'augmenter le débit de gaz produit par le turboréacteur. Aussi, à poussées constantes, la vitesse d'éjection des gaz peut être réduite par rapport à un turboréacteur double flux dépourvu de mélangeur. Comme le bruit de jet augmente avec la vitesse d'éjection des gaz, la diminution de cette vitesse engendre une baisse importante du niveau de bruit au décollage.

En pratique, l'air externe est introduit dans le turboréacteur en aval du générateur de gaz en empruntant des ouvertures réparties sur toute la circonférence de la tuyère. L'air ainsi introduit se mélange au flux gazeux issu du générateur de gaz à l'aide de guides qui s'étendent radialement au travers du canal d'éjection du flux gazeux. Ces guides sont mobiles entre une position dans laquelle ils dégagent les ouvertures et permettent le mélange (lors des phases de décollage de l'avion) et une autre position dans laquelle ils obstruent les ouvertures pour les autres phases de vol.

Bien que satisfaisante, cette solution présente l'inconvénient de nécessiter un allongement important du turboréacteur afin de favoriser le mélange entre le flux d'air externe et le flux gazeux issu du générateur de gaz. Or, l'allongement du turboréacteur se fait au détriment de sa masse. En outre, il est généralement nécessaire d'avoir recours à un revêtement acoustique de la paroi interne de la tuyère d'éjection du turboréacteur de manière à absorber les fréquences sonores les plus nuisibles.

Le document US 5,884,843 décrit un mélangeur de flux selon le préambule de la revendication 1, comportant en outre des vannes fixes pouvant donner une composante directionnelle tangentielle au flux d'air entrant.

### Objet et résumé de l'invention

La présente invention a donc pour but principal de pallier de tels inconvénients en proposant un mélangeur de flux à section variable qui permet de diminuer le niveau de bruit de jet du turboréacteur au décollage dans un encombrement réduit.

Ce but est atteint grâce à un mélangeur de flux à section variable pour turboréacteur double flux d'avion supersonique, comportant une tuyère sensiblement cylindrique centrée sur un axe longitudinal du turboréacteur et destinée à être disposée concentriquement autour d'un générateur de gaz du turboréacteur, la tuyère comportant une pluralité d'ouvertures d'admission d'air externe réparties sur toute sa circonférence, débouchant dans une zone de convergence entre des flux froid et chaud issus du générateur de gaz et dans lesquelles sont montés des lobes mobiles entre deux positions ; une première position dans laquelle ils obstruent les ouvertures de la tuyère et une seconde position différente de la première dans laquelle ils dégagent lesdites ouvertures et s'étendent radialement dans la tuyère de façon à permettre une admission d'air externe au turboréacteur dans ladite zone de convergence, et dans lequel, conformément à l'invention, les lobes présentent une composante azimutale selon une même direction de façon à donner un mouvement giratoire à l'air externe admis dans la zone de convergence lorsque les lobes sont dans la seconde position.

L'utilisation de lobes ayant une composante azimutale favorise considérablement le mélange entre le flux d'air externe au turboréacteur et le flux gazeux issu du générateur de gaz (mélange des flux froid et chaud). En effet, la giration de l'air qui est engendrée par cette forme particulière des lobes augmente les effets de cisaillement existants dans la zone de convergence entre les flux froid et chaud issus du générateur de gaz. Ainsi, pour des performances acoustiques identiques, il est possible de raccourcir la longueur du turboréacteur (et donc de diminuer son poids) par rapport à un turboréacteur muni d'un mélangeur classique. De même, pour une même longueur de turboréacteur, il est possible de diminuer le bruit de jet au décollage par rapport à un turboréacteur muni d'un mélangeur classique.

Les lobes peuvent présenter une section transversale sensiblement en forme de U.

De préférence, chaque lobe est articulé sur la tuyère à une extrémité amont par l'intermédiaire d'un pivot de rotation et est déplacé dans les deux positions au moyen d'au moins un vérin.

La tuyère peut comporter en outre une pluralité d'écopes pivotantes montées dans les ouvertures et reliées chacune à un lobe.

L'invention a également pour objet un turboréacteur pour avion supersonique comportant un mélangeur de flux à section variable tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1 et 2 sont des demi vues schématiques en coupe longitudinale d'un turboréacteur muni d'un mélangeur de flux à section variable selon l'invention dans ses deux positions d'utilisation ;
- les figures 3 et 4 sont des vues en perspective d'un lobe du mélangeur des figures 1 et 2 ;
- la figure 5 est une vue en développé des lobes du mélangeur des figures 1 et 2 ; et
- les figures 6 et 7 sont des vues de face du mélangeur des figures 1 et 2.

### Description détaillée d'un mode de réalisation

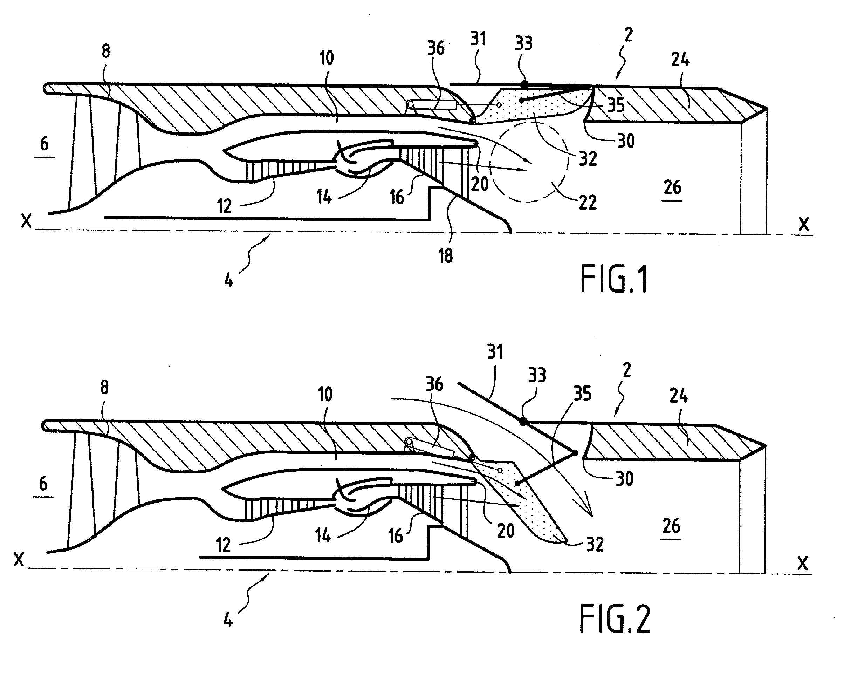

Les figures 1 et 2 sont des demi vues en coupe longitudinale d'un turboréacteur double flux à faible taux de dilution pour avion supersonique.

Un tel turboréacteur 2 se compose essentiellement d'un générateur de gaz 4 d'axe longitudinal X-X partiellement représenté sur les figures 1 et 2.

De façon bien connue en soi, celui-ci présente une entrée d'air 6, un compresseur basse pression 8 alimentant en air pour partie un canal d'écoulement de flux froid 10 et pour une autre partie un compresseur haute-pression 12.

En sortie du compresseur haute-pression 12, l'air comprimé est mélangé à du carburant dans une chambre de combustion 14 pour y être brûlé. Les gaz issus de cette combustion entraînent une turbine 16 avant d'être évacués au travers d'un canal d'écoulement de flux chaud 18.

Une virole annulaire 20 sépare le canal d'écoulement de flux froid 10 du canal d'écoulement de flux chaud 18. En aval de cette virole, les flux froid et chaud se mélangent dans une zone 22 dite de convergence.

Le turboréacteur comporte également une tuyère 24 sensiblement cylindrique qui est centrée sur l'axe longitudinal X-X du turboréacteur. La tuyère 24 est disposée concentriquement autour du générateur de gaz et en aval de celui-ci et définit un canal 26 d'éjection des gaz.

La tuyère 24 comporte une pluralité d'ouvertures 30 d'admission d'air externe qui sont réparties sur toute sa circonférence. Ces ouvertures 30 s'ouvrent vers l'extérieur du turboréacteur et débouchent dans le canal d'éjection 26 sensiblement au niveau de la zone de convergence 22 entre les flux froid et chaud issus du générateur de gaz.

Dans chacune des ouvertures 30 est monté un lobe 32 mobile entre deux positions différentes : une première position (figures 1, 3 et 6) dite de fermeture dans laquelle le lobe obstrue l'ouverture correspondante et une seconde position (figures 2, 4 et 7) dite d'ouverture dans laquelle le lobe dégage l'ouverture correspondante.

La position de fermeture correspond à toutes les phases de vol de l'avion supersonique équipé du turboréacteur, sauf les phases de décollage (il s'agit par exemple des phases de vol en croisière supersonique). Dans cette position, les lobes 32 sont escamotés de façon à obstruer les ouvertures 30 de sorte qu'aucun air externe au turboréacteur n'est admis dans le canal d'éjection 26.

La position d'ouverture correspond aux phases de décollage de l'avion supersonique équipé du turboréacteur. Dans cette position, les lobes 32 sont déployés afin de s'étendre radialement au travers du canal d'éjection 26. Ils servent ainsi de guides pour l'air externe au turboréacteur qui s'introduit dans le canal d'éjection 26 par les ouvertures 30 pour se mélanger aux flux froid et chaud issu du générateur de gaz. Grâce à cet apport d'air externe, le débit de gaz produit par le turboréacteur est augmenté lors du décollage de l'avion.

Comme représenté sur les figures 1 et 2, dans chacune des ouvertures 30 d'admission d'air externe est également montée une écope 31 apte à pivoter autour d'un pivot de rotation 33. Chaque écope 31 est en outre reliée par une bielle 35 au lobe 32 correspondant à l'ouverture d'admission d'air externe.

Ainsi, lorsque les lobes 32 se déploient en position d'ouverture (figure 2), les écopes 31 pivotent avec les lobes pour permettre l'admission d'air externe à l'intérieur du canal d'éjection 26. De même, lors de la fermeture des lobes (figure 1), les écopes 31 pivotent en sens inverse avec les lobes et masquent les ouvertures 30, empêchant ainsi l'admission d'air externe dans le canal d'éjection.

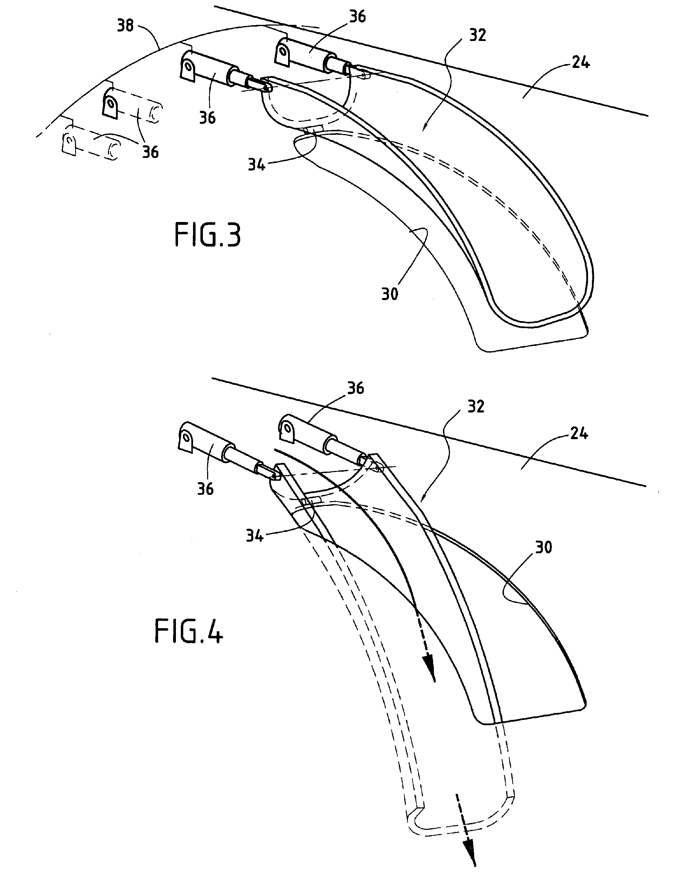

Comme représenté sur les figures 3 et 4, les lobes 32 sont articulés sur la tuyère 24 à leur extrémité amont par l'intermédiaire d'un pivot de rotation 34 et sont déplacés dans leurs deux positions au moyen d'au moins un vérin 36 (par exemple, hydrauliques, pneumatiques ou électriques). La synchronisation des vérins 36 d'actionnement de tous les lobes 32 de la tuyère 24 peut être assurée au moyen d'un câble de synchronisation 38.

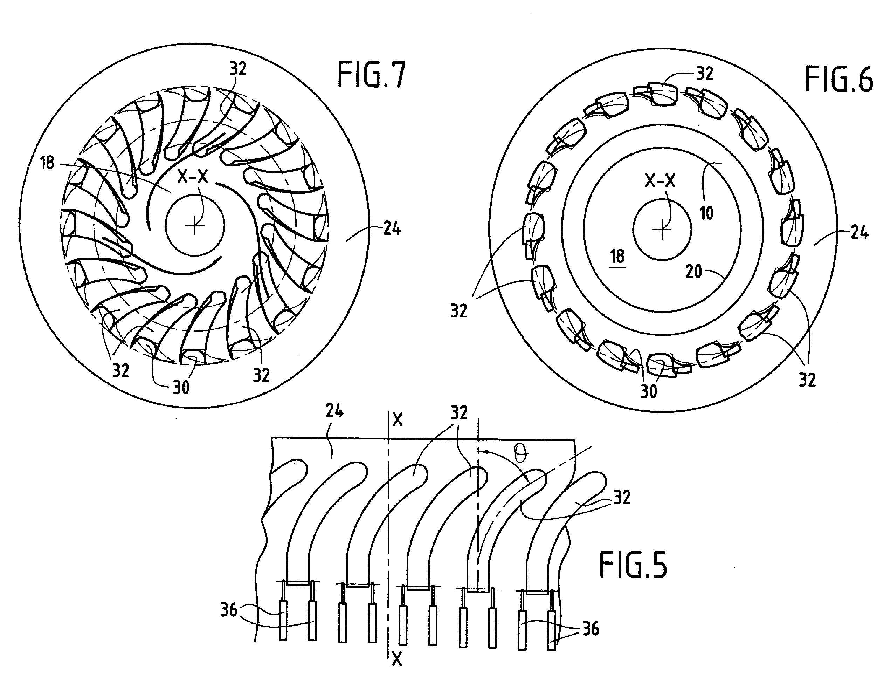

Selon l'invention, les lobes 32 présentent une composante azimutale selon une même direction. Par composante azimutale, on entend que chaque lobe est courbé de manière à ce que son extrémité aval s'écarte du plan radial de pivotement du lobe. Cette composante azimutale qui est définie par rapport à la forme cylindrique de la tuyère 24 est particulièrement visible sur la figure 5 qui est une vue en développé des lobes 32.

Sur cette figure 5, la projection des lobes sur la tuyère 24 n'est pas uniquement parallèle à l'axe longitudinal X-X : elle présente également une inclinaison θ par rapport à celui-ci (l'angle θ est non nul). A titre indicatif, l'inclinaison θ peut atteindre 20° environ.

Comme représenté sur la figure 5, l'inclinaison θ peut être variable : par exemple, elle peut être plus importante à l'extrémité aval qu'à l'extrémité amont des lobes (en projection, les lobes peuvent être sensiblement courbes).

Bien entendu, les ouvertures 30 de la tuyère 24 dans lesquelles sont montés les lobes 32 ont une forme complémentaire à la projection des lobes, c'est-à-dire que leur projection sur la tuyère présente également une inclinaison par rapport à l'axe longitudinal X-X du turboréacteur.

En outre, la composante azimutale est dirigée dans une même direction pour tous les lobes 32. Ainsi, les lobes 32 sont tous « vrillés » selon la même direction afin de donner un mouvement giratoire à l'air externe admis dans la zone de convergence 22 lorsque les lobes sont dans la seconde position.

Ce phénomène de mouvement giratoire donné par la forme particulière des lobes est particulièrement visible sur la figure 7. Sur cette figure qui représente le mélangeur en vue de face, on constate bien que l'air externe admis dans la tuyère 24 subit un mouvement de torsion dans le sens inverse de rotation des aiguilles d'une montre (bien entendu, le sens de giration de l'air pourrait être différent).

Le nombre, la forme et la longueur des lobes, ainsi que leur composante azimutale et leur degré de « pénétration » dans la tuyère lorsqu'ils sont dans leur position d'ouverture varient selon l'application.

Dans un mode de réalisation préférentiel, les lobes 32 présentent une section transversale sensiblement en forme de U (c'est-à-dire qu'ils sont des demi-cylindres).

Alternativement, les lobes pourraient être des demi-cônes ou des gouttières ellipsoïdales par exemple.

## Revendications

1. Mélangeur de flux à section variable pour turboréacteur double flux d'avion supersonique, comportant une tuyère (24) sensiblement cylindrique centrée sur un axe longitudinal (X-X) du turboréacteur (2) et destinée à être disposée concentriquement autour d'un générateur de gaz (4) du turboréacteur, la tuyère (24) comportant une pluralité d'ouvertures (30) d'admission d'air externe réparties sur toute sa circonférence, débouchant dans une zone de convergence (22) entre des flux froid et chaud issus du générateur de gaz (4) et dans lesquelles sont montés des lobes (32) mobiles entre deux positions ; une première position dans laquelle ils obstruent les ouvertures (30) de la tuyère (24) et une seconde position différente de la première dans laquelle ils dégagent lesdites ouvertures (30) et s'étendent radialement dans la tuyère (24) de façon à permettre une admission d'air externe au turboréacteur dans ladite zone de convergence (22), **caractérisé en ce que** chaque lobe (32) est courbé de manière à ce que son extrémité aval s'écarte d'un plan radial de pivotement du lobe et les lobes (32) présentent une composante azimutale selon une même direction de façon à donner un mouvement giratoire à l'air externe admis dans la zone de convergence lorsque les lobes sont dans la seconde position.

2. Mélangeur selon la revendication 1, dans lequel les lobes (32) présentent une section transversale sensiblement en forme de U.

3. Mélangeur selon l'une des revendications 1 et 2, dans lequel chaque lobe (32) est articulé sur la tuyère (24) à une extrémité amont par l'intermédiaire d'un pivot de rotation (34) et est déplacé dans les deux positions au moyen d'au moins un vérin (36).

4. Mélangeur selon l'une quelconque des revendications 1 à 3, dans lequel la tuyère (24) comporte en outre une pluralité d'écopes (31) pivotantes montées dans les ouvertures (30) et reliées chacune à un lobe (32).

5. Turboréacteur pour avion supersonique, **caractérisé en ce qu'**il comporte un mélangeur de flux à section variable selon l'une quelconque des revendications 1 à 4.

## Patentansprüche

1. Strommischer mit veränderlichem Querschnitt für ein Zweistrom-Turboluftstrahltriebwerk eines Überschallflugzeugs, umfassend eine im Wesentlichen zylindrische Düse (24), die um eine Längsachse (X-X) des Turboluftstrahltriebwerks (2) zentriert und dazu bestimmt ist, um einen Gasgenerator (4) des Turboluftstrahltriebwerks herum konzentrisch angeordnet zu werden, wobei die Düse (24) eine Vielzahl von über ihren gesamten Umfang verteilten Öffnungen (30) zum Zuführen von Außenluft umfasst, die in einen Konvergenzbereich (22) zwischen aus dem Gasgenerator (4) kommenden kalten und heißen Strömen münden und in denen Lappen (32) angebracht sind, die zwischen zwei Positionen beweglich sind, einer ersten Position, in der sie die Öffnungen (30) der Düse (24) verschließen, und einer von der ersten verschiedenen zweiten Position, in der sie die Öffnungen (30) freigeben und sich radial in die Düse (24) erstrecken, um ein Zuführen von außerhalb des Turboluftstrahltriebwerks befindlicher Luft in den Konvergenzbereich (22) zu ermöglichen, **dadurch gekennzeichnet, dass** jeder Lappen (32) derart gebogen ist, dass sein stromabwärtiges Ende sich von einer radialen Schwenkebene des Lappens entfernt und die Lappen (32) eine azimutale Komponente in einer gleichen Richtung aufweisen, um der Außenluft, die in den Konvergenzbereich zugeführt wird, wenn sich die Lappen in der zweiten Position befinden, eine Kreisbewegung zu verleihen.

2. Mischer nach Anspruch 1, wobei die Lappen (32) einen im Wesentlichen U-förmigen Querschnitt aufweisen.

3. Mischer nach einem der Ansprüche 1 und 2, wobei jeder Lappen (32) an der Düse (24) an einem stromaufwärtigen Ende mittels eines Drehgelenks (34) angelenkt ist und in beide Positionen mittels wenigstens eines Zylinders (36) bewegt wird.

4. Mischer nach einem der Ansprüche 1 bis 3, wobei die Düse (24) ferner eine Vielzahl von Schwenkschaufeln (31) umfasst, die in den Öffnungen (30) angebracht und jeweils mit einem Lappen (32) verbunden sind.

5. Turboluftstrahltriebwerk für ein Überschallflugzeug, **dadurch gekennzeichnet, dass** es einen Strommischer mit veränderlichem Querschnitt nach einem der Ansprüche 1 bis 4 umfasst.

## Claims

1. Core exhaust mixer, having a variable area, for turbo-fan jet engines of supersonic aircraft, comprising a substantially cylindrical nozzle (24) centered on a longitudinal axis (X-X) of the jet engine (2) and intended to be arranged concentrically about a gas generator (4) of the jet engine, the nozzle (24) comprising a plurality of external air intake apertures (30) distributed over its entire circumference, opening out in a convergence zone (22) between the cold and hot flows issued from the gas generator (4) and in which lobes (32) are mounted, said lobes being movable between two positions; a first position in which they block the apertures (30) of the nozzle (24) and a second position, different from the first position, in which they unblock said apertures (30) and extend radially into the nozzle (24) in order to admit air external to the jet engine into said convergence zone (22), **characterized in that** each lobe (32) is curved so that its downstream end deviates from a radial pivoting plane of the lobe and **in that** the lobes have an azimuthal component in the same direction in order to give a swirling motion to the external air admitted into the convergence zone when the lobes are in the second position.

2. Mixer according to claim 1, in which the lobes (32) have a substantially U-shaped cross section.

3. Mixer according to any one of claims 1 and 2, in which each lobe (32) is articulated on the nozzle (24) at an upstream end by means of a rotary pin (34) and is moved into the two positions by means of at least one jack (36).

4. Mixer according to any one of claims 1 to 3, in which the nozzle (24) comprises moreover a plurality of pivoting scoops (31) mounted in the apertures (30) and each connected to a lobe (32).

5. Jet engine for supersonic aircraft, **characterized in that** it comprises a core exhaust mixer having a variable area according to anyone of claims 1 to4.
